# EUROPEAN PATENT APPLICATION

(11) **EP 4 141 236 A1**
(43) Date of publication of application: **01.03.2023**
(21) Application number: 22193307.0
(22) Date of filing: 31.08.2022
(51) Int. Cl.: F02C 7/14, F02C 7/224

(54) **HEAT EXCHANGE SYSTEM USING COMPRESSOR AIR FOR FUEL PRE-HEATING**

(30) Priority: 31.08.2021 US 202117462932
(71) Applicant: PRATT & WHITNEY CANADA CORP., Longueuil, Québec J4G 1A1 (CA)
(72) Inventor: THIVIERGE, Patrick, (01BE5) Longueuil, J4G 1A1 (CA); DOMINGO, Ritchie, (01BE5) Longueuil, J4G 1A1 (CA)
(74) Representative: Dehns

(57) **Abstract**

A heat exchange system (40) for an aircraft engine (10), has: a fuel conduit (42); an oil conduit (29); a first heat exchanger (41) having a fuel passage (42) and an oil passage (41A), the fuel passage (42) in heat exchange relationship with the oil passage (41A); and a second heat exchanger (50) having a fluid passage (51) and an air passage (52) fluidly in heat exchange relationship with the fluid passage (51), the air passage (52) in fluid communication with a compressor (16), the fluid passage (51) in fluid communication with one of: the oil conduit (29), the fluid passage (51) flowing at least part of the oil flow through the fluid passage (51), the fluid passage (51) of the second heat exchanger (50) located upstream of the oil passage (41A) of the first heat exchanger (41) relative to the oil flow, and the fuel conduit (42), the fluid passage (51) flowing at least part of the fuel flow through the fluid passage (51).

## Description

### TECHNICAL FIELD

The application relates generally to aircraft engines and, more particularly, to fuel and lubrication systems of aircraft engines.

### BACKGROUND

A typical aircraft engine has a lubrication system to meet the lubrication and cooling needs of various components of the engine. The lubrication system can deliver oil from an oil tank to the various components within the engine, recover the used oil from the components, and return the recovered used oil back to the oil tank for recirculation. Some aircraft engines can include one or more heat exchangers to remove heat from the oil. However, the cooling requirements can vary depending on the operating conditions of the aircraft engine. Providing oil cooling that can adapt to the operating conditions of the aircraft engine can affect cost, size, weight and complexity of a cooling system. Improvement is desirable.

### SUMMARY

In one aspect, there is provided a heat exchange system for an aircraft engine, comprising: a fuel conduit flowing a fuel flow when the aircraft engine is in use; an oil conduit flowing an oil flow when the aircraft engine is in use; a first heat exchanger having a fuel passage in fluid communication with the fuel conduit and an oil passage in fluid communication with the oil conduit, the fuel passage in heat exchange relationship with the oil passage; and a second heat exchanger having a fluid passage and an air passage fluidly separated from and in heat exchange relationship with the fluid passage, the air passage in fluid communication with an air outlet of a compressor of the aircraft engine, the air passage flowing a flow of compressed air from the compressor when the aircraft engine is in use, the fluid passage in fluid communication with one of: the oil conduit, the fluid passage flowing at least part of the oil flow through the fluid passage when the aircraft engine is in use, the fluid passage of the second heat exchanger located upstream of the oil passage of the first heat exchanger relative to the oil flow, and the fuel conduit, the fluid passage flowing at least part of the fuel flow through the fluid passage when the aircraft engine is in use.

The heat exchange system described above may include any of the following features, in any combinations.

In some embodiments, a bypass has a bypass inlet upstream of the second heat exchanger and a bypass outlet downstream of the second heat exchanger; and a valve is in fluid communication with the bypass, the valve having an open configuration in which a corresponding one of the fuel flow and the oil flow flowing within the one of the fuel conduit and the oil conduit flows through the valve and bypasses the second heat exchanger and a closed configuration in which the bypass is closed by the valve and in which the corresponding one of the fuel flow and the oil flow flows through the second heat exchanger such that heat from the flow of compressed air is transferred to the corresponding one of the fuel flow and the oil flow.

In some embodiments, the system includes a sensor; and a controller operatively connected to the sensor, the controller having a processing unit and a computer-readable medium having instructions stored thereon executable by the processing unit for: determining that a temperature of the fuel flow is below a temperature threshold from a signal received from the sensor; and configuring the valve in the closed configuration such that the corresponding one of the fuel flow and the oil flow is being heated by the flow of compressed air through the second heat exchanger.

In some embodiments, the fluid passage is in fluid communication with the oil conduit, a first fluid conduit stemming from the oil conduit and connecting the oil conduit with an inlet of the fluid passage of the second heat exchanger, and a second fluid conduit in fluid communication with an outlet of the fluid passage of the second heat exchanger, the second fluid conduit in fluid communication with the oil conduit.

In some embodiments, a bypass connects a first connection point between the oil conduit and the first fluid conduit and a second connection point between the oil conduit and the second fluid conduit, the second connection point downstream of the first connection point relative to the oil flow; and a valve is in fluid communication with the bypass, the valve selectively opening and closing the bypass to respectively allow the oil flow to bypass the second heat exchanger or force the oil flow through the second heat exchanger.

In some embodiments, the fluid passage is in fluid communication with the fuel conduit, a first fluid conduit stemming from the fuel conduit and connecting the fuel conduit with an inlet of the fluid passage of the second heat exchanger, and a second fluid conduit in fluid communication with an outlet of the fluid passage of the second heat exchanger, the second fluid conduit in fluid communication with the fuel conduit.

In some embodiments, a bypass connects a first connection point between the fuel conduit and the first fluid conduit and a second connection point between the fuel conduit and the second fluid conduit, the second connection point downstream of the first connection point relative to the fuel flow; and a valve in fluid communication with the bypass, the valve selectively opening and closing the bypass to respectively allow the fuel flow to bypass the second heat exchanger or force the oil flow through the second heat exchanger.

In some embodiments, the fuel conduit has a fuel conduit inlet connected to a main fuel line at a third connection point and a fuel conduit outlet connected to the main fuel line at a fourth connection point upstream of the third connection point relative to a flow of fuel in the main fuel line.

In some embodiments, a fuel filter is between the third connection point and the fourth connection point.

In some embodiments, the second heat exchanger is located downstream of the first heat exchanger relative to the fuel flow and upstream of the fourth connection point.

In some embodiments, a valve is in fluid communication with an air conduit flowing the flow of compressed air, the valve having open and closed configuration to respectively allow or block the flow of compressed air through the second heat exchanger.

In another aspect, there is provided a method of operating a heat exchange system of an aircraft engine, comprising: transferring heat from an oil flow to a fuel flow; determining that a temperature of the fuel flow is below a temperature threshold; and increasing a temperature of the fuel flow by transferring heat from a flow of compressed air to the fuel flow.

The method may include any of the following features, in any combinations.

In some embodiments, the determining that the temperature is below the temperature threshold includes receiving a signal from a sensor.

In some embodiments, the transferring of the heat from the flow of compressed air to the fuel flow includes transferring heat from the flow of compressed air to the oil flow and transferring heat from the oil flow to the fuel flow.

In some embodiments, the transferring of the heat from the flow of compressed air to the oil flow includes transferring the heat from the flow of compressed air to the oil flow via a first heat exchanger, and wherein the transferring of the heat from the oil flow to the fuel flow includes transferring heat from the oil flow to the fuel flow via a second heat exchanger located downstream of the first heat exchanger.

In some embodiments, the transferring of the heat from the flow of compressed air to the fuel flow includes transferring heat from the flow of compressed air directly to the fuel flow.

In some embodiments, the transferring of the heat from the flow of compressed air directly to the fuel flow includes transferring the heat from the flow of compressed air to the fuel flow via a heat exchanger.

In some embodiments, the method includes determining that the temperature of the fuel flow is above a second temperature threshold; and flowing the fuel flow while bypassing the first heat exchanger.

In some embodiments, the method includes determining that the temperature of the fuel flow is above a second temperature threshold; and flowing the fuel flow while bypassing the heat exchanger.

In some embodiments, the method includes determining that the temperature of the fuel flow is above a second temperature threshold; and blocking the flow of compressed air.

### DESCRIPTION OF THE DRAWINGS

Reference is now made to the accompanying figures in which:
Fig. 1 is a schematic cross sectional view of an aircraft engine depicted as a gas turbine engine in accordance with one embodiment;
Fig. 2 is a schematic view of a heat exchange system for the aircraft engine of Fig. 1 in accordance with one embodiment;
Fig. 3 is a schematic view of a heat exchange system for the aircraft engine of Fig. 1 in accordance with another embodiment;
Fig. 4 is a flowchart illustrating steps of a method for operating the heat exchange system of Fig. 2 and Fig. 3; and
Fig. 5 is a schematic representation of a computing device in accordance with one embodiment.

### DETAILED DESCRIPTION

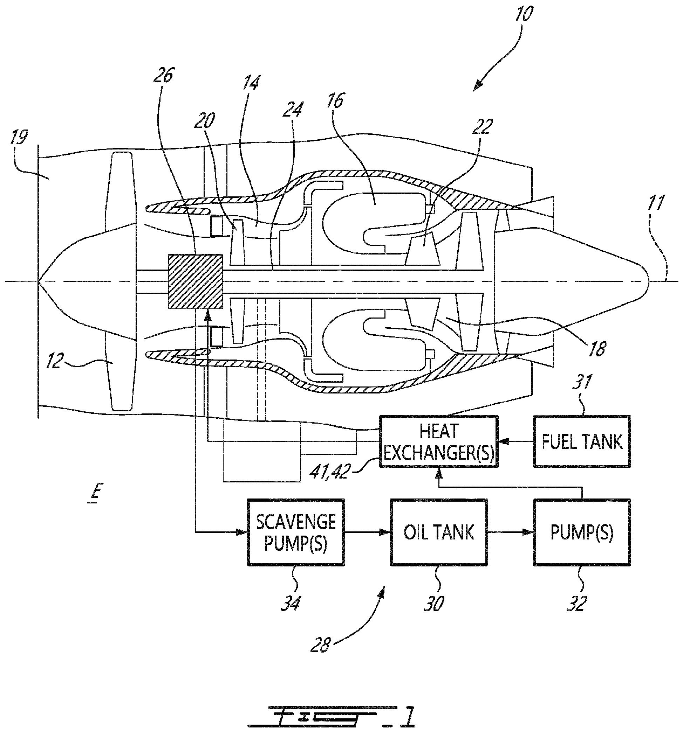

Fig. 1 illustrates an aircraft engine depicted as a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. More specifically, the gas turbine engine 10 has a core gas path including an intake 19 for receiving air. The compressor section 14 has at least one compressor 20 extending across the core gas path and the turbine section 18 has at least one turbine 22 extending across the core gas path, with the at least one compressor 20 and the at least one turbine 22 being rotatable with a rotary shaft 24 supported within the gas turbine engine 10 by bearings 26 (only one being shown for illustration purposes). An oil system 28 is provided for circulating oil to the bearings 26 and back to an oil reservoir 30. It will be appreciated that the principles of the disclosure apply to any aircraft engines, such as internal combustion engines (e.g., piston engine, rotary engine), any type of gas turbine engines, (e.g., turbofan, turboshaft, and turboprop), and auxiliary power unit.

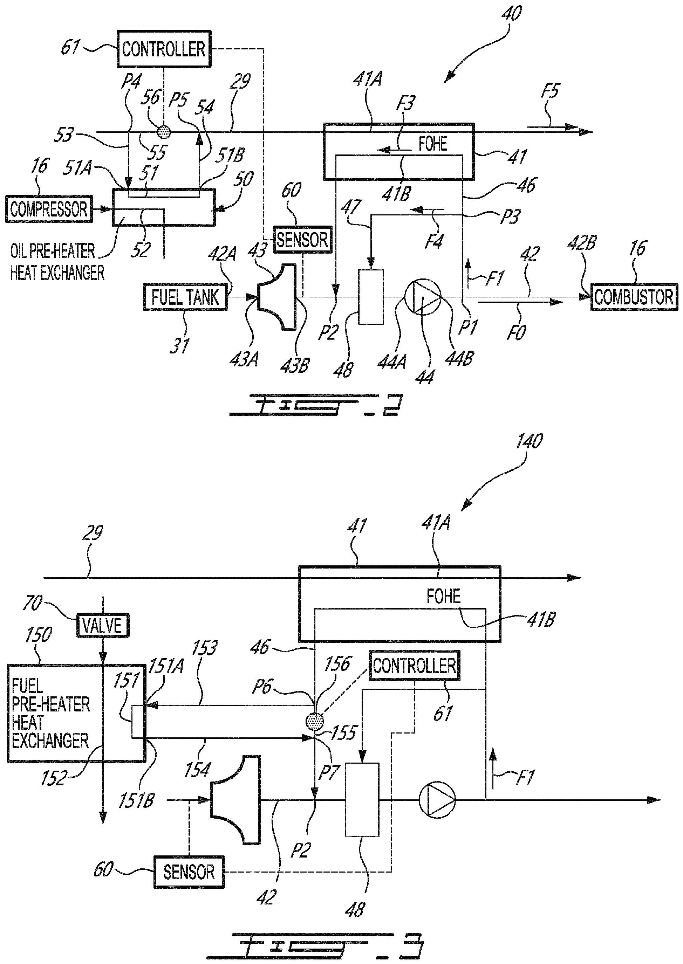

Referring to Fig. 2, in the embodiment shown, the gas turbine engine 10 has a heat exchange system 40 that is used to exchange heat between different fluids for proper operation of the gas turbine engine 10. In the present case, the heat exchange system 40 includes a heat exchanger 41, which may be referred to as a fuel-oil heat exchanger (FOHE), used for transferring heat from the oil of the oil system 28 to fuel flowing from a fuel tank 31, or any other fuel source, to the combustor 16 of the gas turbine engine 10 for combustion. Pre-heating the fuel as such may increase efficiency of the combustion of the fuel. Preheating the fuel may be used to elevate the temperature of the fuel above a minimum requirement during cold day operation. In some cases, the heat exchanger 41 may be used to transfer or extract heat to/from an aircraft system in need. The heat exchange system 40 may include an air-cooled oil cooler (ACOC) used for transferring heat from the oil to ambient air flowing in a bypass duct of the gas turbine engine 10.

The heat exchange system 40 includes a main fuel conduit (or simply "main conduit") 42 that has an inlet 42A hydraulically connected to the fuel tank 31 and an outlet 42B hydraulically connected to the combustor 16. A first pump 43 is used to draw fuel from the fuel tank 31 and hydraulically connected to the main fuel conduit 42 to generate a fuel flow F0 and to increase fluid pressure. The first pump 43 may be referred to as a low-pressure pump since a mass flow rate outputted by the first pump 43 may vary as a function of a pressure in the main fuel conduit 42 downstream of the first pump 43. In other words, a pressure rise provided by the first pump 43 may vary as a function of a mass flow rate in the main fuel conduit 42 flowing through the first pump 43. Typically, such a low-pressure pump includes an impeller rotatable to create a pressure rise between a first pump inlet 43A and a first pump outlet 43B of the first pump 43 to draw the fuel from the fuel tank 31. The first pump 43 may be used to support the functionality of the system downstream of the first pump 43, such as providing a second pump with the necessary inlet pressure.

The heat exchange system 40 includes a second pump 44 hydraulically connected to the main fuel conduit 42 downstream of the first pump 43. The second pump 44 may be referred to as a high-pressure pump due to the relatively high pressure rise it offers in relation to the low pressure pump located upstream in order to condition the fuel for combustion. The pressure generated by the second pump 44 may also be used to support downstream component and system functionality. A mass flow rate outputted or generated by the second pump 44 may not vary as a function of a pressure in the main fuel conduit 42 downstream of the second pump 44. Such a high-pressure pump is sometimes referred to as a fixed-displacement pump (e.g., gear pump). At a given rotational speed, a fixed mass flow rate is drawn from a second pump inlet 44A of the second pump 44 to a second pump outlet 44B thereof.

In the embodiment shown, a return conduit 46 stems from the main fuel conduit 42 at a first connection point P1, which corresponds to an inlet (or "return inlet") of the return conduit 46, and is hydraulically connected (i.e. at a "return outlet") to the main fuel conduit 42 at a second connection point P2 on the main fuel conduit 42 and located upstream of the first connection point P1 relative to the fuel flow F0. Since a mass flow rate outputted by the second pump 44 may be substantially higher than necessary for combustion, the return conduit 46 may allow to redirect excess flow, or spill flow F1, from the second pump 44. In other words, there may be a mismatch between the mass flow rate of fuel generated by the second pump 44 and a fuel requirement of the combustor 16. The fuel flow rate to the combustor 16 may be governed by valves (not shown). These valves may be located at location P1. The return conduit 46 diverts the fuel that is not need by the combustor 16 back to the main fuel conduit 42 upstream of the second pump 44. In the embodiment shown, the second connection point P2 is located downstream of the first pump 43 and upstream of the second pump 44. A pressure regulating valve (PRV) may be hydraulically connected on the return conduit 46 upstream of the heat exchanger 41. A metering valve may be hydraulically connected on the main fuel conduit 42. The pressure regulating valve may be hydraulically connected to the metering valve such that the PRV perceives upstream and downstream pressure of the metering valve.

The heat exchanger 41 includes at least one first conduit 41A in fluid communication with an oil conduit 29 of the oil system 28 (Fig. 1) and at least one second conduit 41B for flowing fuel. The heat exchanger 41 is used to warm up the fuel and cool down the oil by providing a heat exchange relationship between the at least one first conduit 41A and the at least one second conduit 41B. The return conduit 46 is in fluid flow communication with the at least one second conduit 41B of the heat exchanger 41 for flowing a flow F3 that will exchange heat with the oil through the heat exchanger 41. Therefore, the spill flow F1 generated by the second pump 44 and not required by the combustor 16 is leveraged to cool down the oil of the oil system 28 and heat up the fuel flowing in the main fuel conduit 42.

The heat exchange system 40 further includes a bypass conduit 47 that stems from the return conduit 46 at a third connection point P3 located downstream of the first connection point P1 and upstream of the heat exchanger 41 relative to the spill flow F1 flowing in the return conduit 46. The bypass conduit 47 has a bypass inlet at the third connection point P3 and an bypass outlet connected to the main fuel conduit 42. In the present case, the bypass conduit 47 is hydraulically connected to the main fuel conduit 42 through a fuel filter housing 48, but other configurations are contemplated. The fuel filter housing 48 may be located between the first and second connection points P1, P2. The bypass conduit 47 may be hydraulically connected to the main fuel conduit 42 downstream of the second connection point P2 and upstream of the second pump 44. A controlled orifice may be hydraulically connected to the bypass conduit 47 between the third connection point P3 and the bypass outlet of the bypass conduit 47 to restrict a flow passage area such that a mass flow rate of a bypass flow F4 flowing into the bypass conduit 47 remains below a given threshold.

In some operating conditions, for instance, when starting the gas turbine engine 10 when the temperature of ambient air is cold and below a certain threshold, it may be desired to warm up the fuel to prevent it from icing in the fuel filter housing 48. The heat exchanger 41 is used to warm-up the fuel by transferring heat from the oil to the fuel. However, in these cold conditions, and when the engine 10 is still starting and warming up, not enough heat may be provided by the oil to maintain a temperature of the fuel above a given threshold (e.g., 43 degrees Fahrenheit). It may be therefore useful to have a heater to help warming up the fuel during cold days.

In the embodiment shown, the heat exchange system 40 further includes a second heat exchanger 50. The second heat exchanger 50 has at least one oil passage 51 and at least one air passage 52 in heat exchange relationship with the at least one oil passage 51. In the depicted embodiment, the at least one air passage 52 is in fluid communication with the compressor section 14 of the gas turbine engine 10. Air may be bled from the compressor section 14 at any suitable location and flown through the second heat exchanger 50. The compressed air, which may have a temperature of about 730 degrees Fahrenheit, may transfer its heat via the second heat exchanger 50 to the oil flowing in the oil conduit 29. Hence, the heat from the compressed air may be transferred to the fuel via the oil and via the heat exchanger 41 and via the second heat exchanger 50. In other words, oil is used as an intermediary to carry the heat to the fuel. The second heat exchanger 50 is therefore located upstream of the heat exchanger 41 relative to an oil flow F5 in the oil conduit 29. The oil flowing in the oil conduit 29 is heated by the compressed air through the second heat exchanger 50. The oil has then more heat to transfer to the fuel via the heat exchanger 41.

Still referring to Fig. 2, the at least one oil passage 51 of the second heat exchanger 50 has an inlet 51A and an outlet 51B. The inlet 51A is hydraulically connected to the oil conduit 29 via a first conduit 53. The outlet 51B is hydraulically connected to the oil conduit 29 via a second conduit 54. A fourth connection point P4 between the first conduit 53 and the oil conduit 29 is located upstream of a fifth connection point P5 between the second conduit 54 and the oil conduit 29. A portion of the oil conduit 29 between the fourth and fifth connection points P4, P5 may act as a bypass 55 allowing the oil flow F5 to flow directly to the heat exchanger 41 while bypassing the second heat exchanger 50.

A valve 56 is hydraulically connected to the bypass 55 between the fourth and fifth connection points P4, P5. The valve 56 is selectively opening and closing the bypass 55 to respectively allow the oil flow F5 to bypass the second heat exchanger 50 or force the oil flow through the second heat exchanger 50. More specifically, in the present configuration, if the valve 56 is closed, the oil is forced to divert away from the oil conduit 29 and flow in the first conduit 53, the at least one oil passage 51 of the second heat exchanger 50, and the second conduit 54. However, if the valve 56 is open, a flow resistance may be greater through the second heat exchanger 50 than through the bypass 55. The oil flow F5 may therefore flow naturally through the bypass 55 and bypasses the second heat exchanger 50. The valve 56 may be a three-way valve.

A sensor 60 may be operatively connected to the main fuel conduit 42 and may be operable to send a signal to a controller 61; the signal indicative of a temperature of the fuel. The controller 61 may therefore determine that the temperature of the fuel flow is below a temperature threshold based on the signal received from the sensor 60; and configure the valve 56 in the closed configuration such that the oil flow F5 is being heated through the second heat exchanger 50. The sensor 60 may be a temperature sensor measuring a temperature of the fuel. In some cases, the sensor 60 may be a temperature sensor measure a temperature of an environment in which the gas turbine engine 10 is to be operated. In some other cases, the sensor 60 may be an oil temperature sensor. The sensor 60 may measure any parameter indicative of the engine 10 being operated in operating conditions in which the fuel is susceptible to icing.

It will be appreciated that another intermediary fluid may be used to receive the heat from the compressed air instead of the oil. For instance, a hydraulic fluid may be used; the second heat exchanger 50 transferring heat to the hydraulic fluid from the compressed air and the heat exchanger 41 transferring heat from the hydraulic fluid to the fuel.

Referring now to Fig. 3, another embodiment of a heat exchange system is shown at 140. For the sake of conciseness, only elements differing from the heat exchange system 40 described above with reference to Fig. 2 are described below.

In the embodiment shown, the heat exchange system 140 includes a second heat exchanger 150 having at least one fuel passage 151 and at least one air passage 152 in heat exchange relationship with the at least one fuel passage 151. As explained above, the at least one air passage 152 may flow compressed air bled from the compressor section 14 of the gas turbine engine 10. The second heat exchanger 150 may be located downstream of the heat exchanger 41 relative to the fuel flow F3 flowing through the heat exchanger 41 and upstream of the second connection point P2.

The at least one fuel passage 151 of the second heat exchanger 150 has an inlet 151A and an outlet 151B. The inlet 151A is hydraulically connected to the main fuel conduit 42. In the embodiment shown, the inlet 151A is hydraulically connected to the return conduit 46 via a first conduit 153 connected to the return conduit 46 at a connection point located downstream of the heat exchanger 41 relative to the flow F3 flowing in the return conduit 46 and upstream of the second connection point P2 between the return conduit 46 and the main fuel conduit 42. The outlet 151B of the at least one fuel passage 151 of the second heat exchanger 150 is hydraulically connected to the return conduit 46 via a second conduit 154. A sixth connection point P6 between the first conduit 153 and the return conduit 46 is located upstream of a seventh connection point P7 between the second conduit 154 and the return conduit 46. A portion of the return conduit 46 between the sixth and seventh connection points P6, P7 may act as a bypass 155 allowing the spill flow F3 to flow directly back to the main fuel conduit 42 while bypassing the second heat exchanger 150.

A valve 156 is hydraulically connected to the bypass 155 between the sixth and seventh connection points P6, P7. The valve 156 is selectively opening and closing the bypass 155 to respectively allow the flow F3 to bypass the second heat exchanger 150 or force the flow F3 through the second heat exchanger 150. More specifically, in the present configuration, if the valve 156 is closed, the fuel is forced to divert away from the return conduit 46 and flow in the first conduit 153, the at least one fuel passage 151 of the second heat exchanger 150, and the second conduit 154. However, if the valve 156 is open, a flow resistance may be greater through the second heat exchanger 150 than through the bypass 155. The flow F3 may therefore flow naturally through the bypass 155 and bypasses the second heat exchanger 150. The valve 156 may be a three-way valve connected at the sixth connection point P6.

In the embodiment shown, the heat from the compressed air is transferred directly to the fuel via the second heat exchanger 150 without being transferred to the oil. It will be appreciated that alternative locations of the second heat exchanger 150 are contemplated. For instance, the second heat exchanger 150 may be located on the return conduit 46 upstream of the heat exchanger 41 or directly on the main fuel conduit 42 upstream of the fuel filter housing 48, which is the location where icing is most likely to occur. Any locations where the fuel heated by the compressed air flows through the fuel filter housing 48 is contemplated.

A sensor 60 may be operatively connected to the main fuel conduit 42 or to the return conduit 46 and may be operable to send a signal to a controller 61; the signal indicative of a temperature of the fuel. The controller 61 may therefore determine that the temperature of the fuel flow is below a temperature threshold based on the signal received from the sensor 60; and configure the valve 156 in the closed configuration such that the flow F3 of fuel is being heated through the second heat exchanger 150. The sensor 60 may be a temperature sensor measuring a temperature of the fuel. In some cases, the sensor 60 may be a temperature sensor measure a temperature of an environment in which the gas turbine engine 10 is to be operated.

In some embodiments, the bypass 55, 155 may be omitted and a valve 70 may be connected on a air conduit that fluidly connects the compressor section 14, or any other source of compressed air, to the at least one air passage 52, 152 of the second heat exchanger 50 150. The valve 70 may be used to selectively allow or block a flow of the compressed air through the second heat exchanger 50, 150 depending of whether or not more heat is required to prevent the fuel from icing. The controller 61 may be operatively connected to the valve 70 to open the valve 70 the temperature of the fuel is below a first threshold and close the valve 70 when the fuel is above a given threshold. The valve 70 may be used in conjunction with the bypass valves 56, 156 such that air is not flown through the second heat exchanger 50, 150 if not required.

The compressed air, after exiting the at least one air passage 52, 152 of the second heat exchanger 50, 150 may be discharged back into a core gaspath or annular gaspath of the gas turbine engine 10 to contribute to thrust. In some other embodiments, the compressed air may be used for other functions, such as powering pneumatic actuators and so on.

The second heat exchanger 50, 150 may act as a fuel pre-heater to increase an amount of heat transferred to the fuel. The second heat exchanger 50, 150 may be bypassed when the fuel temperature is above a given threshold. The second heat exchanger 50, 150 may be able to transfer about 400-500 BTU/min of heat from the compressed air to the oil or fuel.

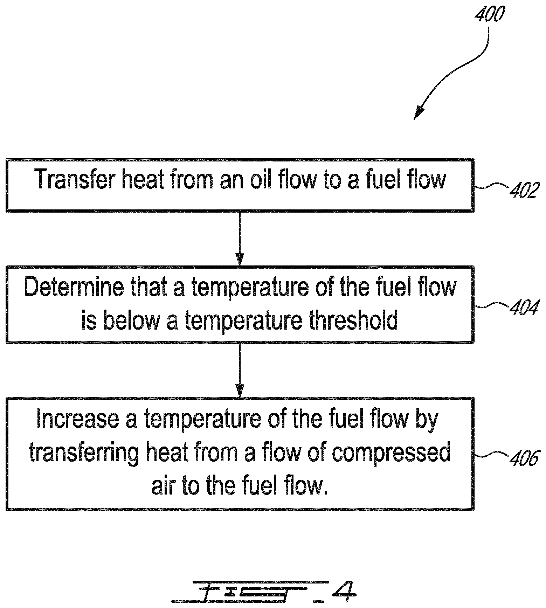

Referring now to Fig. 4, a method of operating the heat exchange system 40, 140 is shown at 400. The method 400 includes transferring heat from the oil flow to the fuel flow at 402; determining that a temperature of the fuel flow is below a temperature threshold at 404; and increasing a temperature of the fuel flow by transferring heat from a flow of compressed air to the fuel flow at 406.

In the embodiment shown, the determining that the temperature is below the temperature threshold includes receiving a signal from a sensor. The transferring of the heat from the flow of compressed air to the fuel flow may include transferring heat from the flow of compressed air to the oil flow and transferring heat from the oil flow to the fuel flow as shown in Fig. 2. The transferring of the heat from the flow of compressed air to the oil flow may include transferring the heat from the flow of compressed air to the oil flow via the second heat exchanger 50 and transferring heat from the oil flow to the fuel flow via the heat exchanger 41 located downstream of the second heat exchanger 50.

As shown in Fig. 3, the transferring of the heat from the flow of compressed air to the fuel flow at 406 may include transferring heat from the flow of compressed air directly to the fuel flow. The transferring of the heat from the flow of compressed air directly to the fuel flow may include transferring the heat from the flow of compressed air to the fuel flow via the second heat exchanger 150.

The method 400 may include determining that the temperature of the fuel flow is above a second temperature threshold; and flowing the fuel flow while bypassing the second heat exchanger 50, 150. In some embodiments, the method 400 includes determining that the temperature of the fuel flow is above a second temperature threshold; and blocking the flow of compressed air through the second heat exchanger 50, 150.

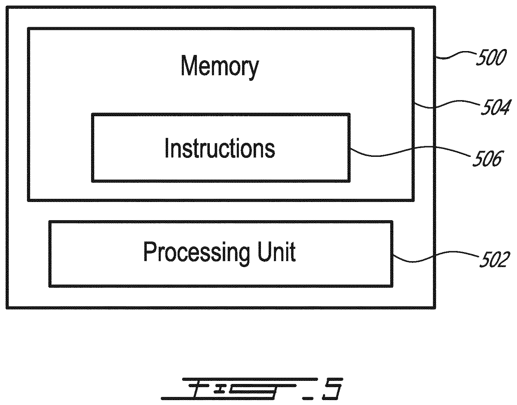

With reference to Fig. 5, an example of a computing device 500 is illustrated. For simplicity only one computing device 500 is shown but the system may include more computing devices 500 operable to exchange data. The computing devices 500 may be the same or different types of devices. The controller 61 may be implemented with one or more computing devices 500. Note that the controller 61 can be implemented as part of a full-authority digital engine controls (FADEC) or other similar device, including electronic engine control (EEC), engine control unit (ECU), electronic propeller control, propeller control unit, and the like. In some embodiments, the controller 61 is implemented as a Flight Data Acquisition Storage and Transmission system, such as a FAST^{™} system. The controller 61 may be implemented in part in the FAST^{™} system and in part in the EEC. Other embodiments may also apply.

The computing device 500 comprises a processing unit 502 and a memory 504 which has stored therein computer-executable instructions 506. The processing unit 502 may comprise any suitable devices configured to implement the method 400 such that instructions 506, when executed by the computing device 500 or other programmable apparatus, may cause the functions/acts/steps performed as part of the method 400 as described herein to be executed. The processing unit 502 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 504 may comprise any suitable known or other machine-readable storage medium. The memory 504 may comprise non-transitory computer readable storage medium, for example, but not limited to, an electronic, magnetic, optical, electromagnetic, infrared, or semiconductor system, apparatus, or device, or any suitable combination of the foregoing. The memory 504 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 504 may comprise any storage means (e.g., devices) suitable for retrievably storing machine-readable instructions 506 executable by processing unit 502.

The methods and systems for operating the heat exchange system 40, 140 described herein may be implemented in a high level procedural or object oriented programming or scripting language, or a combination thereof, to communicate with or assist in the operation of a computer system, for example the computing device 500. Alternatively, the methods and systems for operating the heat exchange system 40, 140 may be implemented in assembly or machine language. The language may be a compiled or interpreted language. Program code for implementing the methods and systems for operating the heat exchange system 40, 140 may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for operating the heat exchange system 40, 140 may also be considered to be implemented by way of a non-transitory computer-readable storage medium having a computer program stored thereon. The computer program may comprise computer-readable instructions which cause a computer, or more specifically the processing unit 502 of the computing device 500, to operate in a specific and predefined manner to perform the functions described herein, for example those described in the method 400.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A heat exchange system for an aircraft engine, comprising:
a fuel conduit flowing a fuel flow when the aircraft engine is in use;
an oil conduit flowing an oil flow when the aircraft engine is in use;
a first heat exchanger having a fuel passage in fluid communication with the fuel conduit and an oil passage in fluid communication with the oil conduit, the fuel passage in heat exchange relationship with the oil passage; and
a second heat exchanger having a fluid passage and an air passage fluidly separated from and in heat exchange relationship with the fluid passage, the air passage in fluid communication with an air outlet of a compressor of the aircraft engine, the air passage flowing a flow of compressed air from the compressor when the aircraft engine is in use, the fluid passage in fluid communication with one of:
the oil conduit, the fluid passage flowing at least part of the oil flow through the fluid passage when the aircraft engine is in use, the fluid passage of the second heat exchanger located upstream of the oil passage of the first heat exchanger relative to the oil flow, and
the fuel conduit, the fluid passage flowing at least part of the fuel flow through the fluid passage when the aircraft engine is in use.

2. The heat exchange system of claim 1, comprising:
a bypass having a bypass inlet upstream of the second heat exchanger and a bypass outlet downstream of the second heat exchanger; and
a valve in fluid communication with the bypass, the valve having an open configuration in which a corresponding one of the fuel flow and the oil flow flowing within the one of the fuel conduit and the oil conduit flows through the valve and bypasses the second heat exchanger and a closed configuration in which the bypass is closed by the valve and in which the corresponding one of the fuel flow and the oil flow flows through the second heat exchanger such that heat from the flow of compressed air is transferred to the corresponding one of the fuel flow and the oil flow.

3. The heat exchange system of claim 2, comprising:
a sensor; and
a controller operatively connected to the sensor, the controller having a processing unit and a computer-readable medium having instructions stored thereon executable by the processing unit for:
determining that a temperature of the fuel flow is below a temperature threshold from a signal received from the sensor; and
configuring the valve in the closed configuration such that the corresponding one of the fuel flow and the oil flow is being heated by the flow of compressed air through the second heat exchanger.

4. The heat exchange system of any one of claims 1 to 3, wherein the fluid passage is in fluid communication with the oil conduit, a first fluid conduit stemming from the oil conduit and connecting the oil conduit with an inlet of the fluid passage of the second heat exchanger, and a second fluid conduit in fluid communication with an outlet of the fluid passage of the second heat exchanger, the second fluid conduit in fluid communication with the oil conduit.

5. The heat exchange system of claim 4, comprising:
a bypass connecting a first connection point between the oil conduit and the first fluid conduit and a second connection point between the oil conduit and the second fluid conduit, the second connection point downstream of the first connection point relative to the oil flow; and
a valve in fluid communication with the bypass, the valve selectively opening and closing the bypass to respectively allow the oil flow to bypass the second heat exchanger or force the oil flow through the second heat exchanger.

6. The heat exchange system of any one of claims 1 to 3, wherein the fluid passage is in fluid communication with the fuel conduit, a first fluid conduit stemming from the fuel conduit and connecting the fuel conduit with an inlet of the fluid passage of the second heat exchanger, and a second fluid conduit in fluid communication with an outlet of the fluid passage of the second heat exchanger, the second fluid conduit in fluid communication with the fuel conduit.

7. The heat exchange system of claim 6, comprising:
a bypass connecting a first connection point between the fuel conduit and the first fluid conduit and a second connection point between the fuel conduit and the second fluid conduit, the second connection point downstream of the first connection point relative to the fuel flow; and
a valve in fluid communication with the bypass, the valve selectively opening and closing the bypass to respectively allow the fuel flow to bypass the second heat exchanger or force the oil flow through the second heat exchanger.

8. The heat exchange system of claim 7, wherein the fuel conduit has a fuel conduit inlet connected to a main fuel line at a third connection point and a fuel conduit outlet connected to the main fuel line at a fourth connection point upstream of the third connection point relative to a flow of fuel in the main fuel line, wherein the second heat exchanger is preferably located downstream of the first heat exchanger relative to the fuel flow and upstream of the fourth connection point.

9. A method of operating a heat exchange system of an aircraft engine, comprising:
transferring heat from an oil flow to a fuel flow;
determining that a temperature of the fuel flow is below a temperature threshold; and
increasing a temperature of the fuel flow by transferring heat from a flow of compressed air to the fuel flow.

10. The method of claim 9, wherein the determining that the temperature is below the temperature threshold includes receiving a signal from a sensor.

11. The method of claim 9 or 10, wherein the transferring of the heat from the flow of compressed air to the fuel flow includes transferring heat from the flow of compressed air to the oil flow and transferring heat from the oil flow to the fuel flow.

12. The method of claim 11, wherein the transferring of the heat from the flow of compressed air to the oil flow includes transferring the heat from the flow of compressed air to the oil flow via a first heat exchanger, and wherein the transferring of the heat from the oil flow to the fuel flow includes transferring heat from the oil flow to the fuel flow via a second heat exchanger located downstream of the first heat exchanger.

13. The method of claim 9 or 10, wherein the transferring of the heat from the flow of compressed air to the fuel flow includes transferring heat from the flow of compressed air directly to the fuel flow.

14. The method of claim 13, wherein the transferring of the heat from the flow of compressed air directly to the fuel flow includes transferring the heat from the flow of compressed air to the fuel flow via a heat exchanger.

15. The method of any one of claims 12 to 14, comprising:
determining that the temperature of the fuel flow is above a second temperature threshold; and performing at least one of:
1) flowing the fuel flow while bypassing the first heat exchanger;
2) flowing the fuel flow while bypassing the heat exchanger; and
3) blocking the flow of compressed air.
